# EUROPEAN PATENT APPLICATION

(11) **EP 3 819 439 A1**
(43) Date of publication of application: **12.05.2021**
(21) Application number: 19892793.1
(22) Date of filing: 16.04.2019
(51) Int. Cl.: E04B 1/19, A47K 3/30

(54) **CONNECTOR, CONNECTION STRUCTURE AND FRAME**

(30) Priority: 07.12.2018 CN 201811496130
(71) Applicant: Fujian Xihe Sanitary Ware Technology Co., Ltd., QuanZhou, Fujian 362304 (CN)
(72) Inventor: LIN, Xiaofa, QuanZhou, Fujian 362304 (CN); LIN, Xiaoshan, QuanZhou, Fujian 362304 (CN); LIU, Qiqiao, QuanZhou, Fujian 362304 (CN); DENG, Xiaoqing, QuanZhou, Fujian 362304 (CN); ZHENG, Pengxing, QuanZhou, Fujian 362304 (CN)
(74) Representative: Schröer, Gernot H.
(86) International application number: PCT/CN2019/082910
(87) International publication number: WO 2020/113884

(57) **Abstract**

A connector, a connection structure and a frame, the connection structure being used to connect an adjacent first and second frame edges, one end of the second frame edge being provided with an insertion mating part, and the connection structure comprising: a connector used for fixing onto one end of a first frame edge, an end thereof with a back facing the first frame having an insertion part, and an end surface of the end with the back thereof facing the first frame being provided with a through hole; a locking element having a latch, swingingly mounted on the connector, the locking element swinging back and forth being capable of causing the latch to extend out of the through hole and retract; and a mating component having a latch mating part, used to fixedly mount in the insertion mating part; the insertion part being inserted into the insertion mating part from an end surface of the second frame, the latch extended outward clamping onto the latch mating part, so as to lock together the insertion part and the insertion mating part.

## Description

### Technical Field

The present disclosure relates to, but is not limited to the technical field of kitchen and bathroom and more particularly, relates to a connecting piece, a connecting structure and a frame.

### Background

In current frames, the adjacent frame edges thereof are fixed and connected directly by screws, which is cumbersome and causes the whole frame installation process to be time-consuming and laborious.

### Summary

The following is a summary of the subject matter described in detail in the present disclosure, and this summary is not intended to limit the protection scope of the claims.

The present disclosure provides a connecting structure for connecting adjacent first and second frame edges, one end of the second frame edge being provided with an insertion fitting part, the connecting structure including: a connecting piece configured for being fixed at one end of the first frame edge, an end of the connecting piece facing away from the first frame edge being provided with an insertion part and an end surface of the end of the connecting piece facing away from the first frame edge being provided with a through hole; a locking piece having a locking tongue, the locking piece being swingably installed on the connecting piece, the locking piece swinging back and forth to enable the locking tongue to retract from and extend out of the through hole; and a fitting piece having a locking tongue fitting part, the fitting piece being configured to be fixedly installed in the insertion fitting part. The insertion part is inserted into the insertion fitting part from an end surface of the second frame edge, and the extended locking tongue is cooperated with the locking tongue fitting part to lock the insertion part and the insertion fitting part together.

Optionally, the connecting structure further includes a restoring spring which is disposed between the locking piece and the connecting piece and is configured to keep the locking tongue extending out of the through hole.

Optionally, the locking piece is further provided with a positioning post and a shaft hole, the shaft hole is located between the positioning post and the locking tongue, and one end of the restoring spring presses against a side of the connecting piece facing the first frame edge and the other end of the restoring spring abuts against the positioning post.

Optionally, the connecting piece is provided with a recessed cavity which opens toward the first frame edge, and the locking piece and the restoring spring are installed in the recessed cavity.

Optionally, a cavity wall of the recessed cavity is provided with a mounting opening, the locking piece and the restoring spring are capable of being installed in the recessed cavity through the mounting opening or being dismounted through the mounting opening.

Optionally, the locking tongue fitting part and the locking tongue each have a guiding assembly surface, the locking tongue fitting part is a locking boss or a locking groove, the insertion part is a through slit, the insertion fitting part is a through slot, and a slot wall of the through slot is inserted into the through slit.

Optionally, one end of the connecting piece near the first frame edge is provided with an installation part, and the installation part is fixedly connected with the first frame edge.

Optionally, the installation part is an installation plate, and the installation plate is fixedly connected with the first frame edge by a screw.

Optionally, the installation plate is provided with a screw hole, the first frame edge is provided with a socket, a side wall of the socket is provided with a through hole, the installation plate is inserted into the socket, and the screw passes through the through hole and is screwed into the screw hole.

The connecting structure also includes a pressing plate and a decorative piece. The pressing plate is fixed on the first frame edge by the screw to form a guide rail on the first frame edge; the decorative piece is formed with a concave groove and the formed concave groove is clamped on the guide rail such that the screw is hidden in the decorative piece.

Optionally, the installation plate is provided with a position adjusting elongated hole, the first frame edge is provided with a screw hole, the screw passes through the position adjusting elongated hole and is screwed into the screw hole; and the position adjusting elongated hole is configured to adjust the length of the connecting piece extending beyond the end of the first frame edge by adjusting the position of the screw in the position adjusting elongated hole. The connecting structure further includes a decorative piece; the installation plate forms a guide rail on the first frame edge; the decorative piece formed with a concave groove is clamped on the guide rail, so that the screw is hidden in the decorative piece.

The present disclosure also provides a frame, which includes a first frame edge, a second frame edge and any of the connecting structures described above.

The present disclosure also provides a connecting piece for connecting adjacent first and second frame edges. The connecting piece is fixed at one end of the first frame edge; and one end of the second frame edge is provided with an insertion fitting part in which a fitting piece having a locking tongue fitting part is fixedly installed. An end surface of the end of the connecting piece facing away from the first frame edge is provided with a through hole for the locking tongue of the locking piece to swing back and forth to retract from and extend out of the through hole. The end of the connecting piece facing away from the first frame edge is provided with an insertion part for being inserted into the insertion fitting part from an end surface of the second frame edge, so that the extended locking tongue is cooperated with the locking tongue fitting part to lock the insertion part and the insertion fitting part together.

Optionally, the side of the connecting piece facing the first frame edge is configured for accommodating a restoring spring, and one end of the restoring spring presses against the side and the other end of the restoring spring abuts against the locking piece.

Optionally, the connecting piece is provided with a recessed cavity which opens toward the first frame edge and is configured for installing the locking piece and the restoring spring therein.

Optionally, a cavity wall of the recessed cavity is provided with a mounting opening for the locking piece and the restoring spring to mount in the recessed cavity through the mounting opening or dismount through the mounting opening.

The connecting structure provided by the embodiments of the present disclosure is configured for connecting adjacent first and second frame edges of the frame. The connecting piece is fixed at one end of the first frame edge. The fitting piece is fixedly installed in the insertion fitting part. When the first and second frame edges are connected, the insertion part is inserted into the insertion fitting part from the end surface of the second frame edge. After the insertion part is in place, the locking tongue extending out of the through hole is cooperated with the locking tongue fitting part to prevent the insertion part from moving reversely and exiting the insertion fitting part. Such connection is simple, convenient, time-saving, and labor-saving. The first frame edge and the second frame edge will not be unlocked and disconnected by themselves after being connected, the practicability is better.

Other features and advantages of the present disclosure will be set forth in the description which follows, and in part will be obvious from the description, or may be learned by implementation of the present disclosure. The objects and other advantages of the present disclosure can be realized and obtained by the structures particularly indicated in the specification, claims and drawings.

### Brief Description of Drawings

The accompanying drawings are used to provide further understanding of the technical schemes of the present disclosure and constitute a part of the specification. They are used to explain the technical schemes of the present disclosure together with the embodiments of the present disclosure and do not constitute a limit to the technical schemes of this disclosure.
FIG. 1 is a schematic cross-sectional diagram of a partial structure of a frame according to an embodiment of the present disclosure, in which a locking piece and a fitting piece are locked;
FIG. 2 is a schematic exploded structural diagram of fitting of a first frame edge and a connecting piece in FIG. 1;
FIG. 3 is a schematic diagram of the three-dimensional structure of a second frame edge and the fitting piece in FIG. 1 after being assembled;
FIG. 4 is a schematic cross-sectional diagram of a partial structure of a frame according to another embodiment of the present disclosure, in which a locking piece and a fitting piece are locked;
FIG. 4a is a schematic cross-sectional diagram of a partial structure of the frame according to another embodiment of the present disclosure, in which the locking piece and the fitting piece are disengaged;
FIG. 5 is a schematic exploded structural diagram of fitting of the first frame edge and the connecting piece in FIG. 4;
FIG. 6 is a schematic structural diagram of fitting of the first frame edge and the connecting piece in FIG. 4 after a decorative piece is installed;
FIG. 7 is a schematic structural diagram of fitting of the first frame edge and the connecting piece in FIG. 4;
FIG. 8 is a schematic exploded structural diagram of the second frame edge and the fitting piece in FIG. 7 after being assembled.

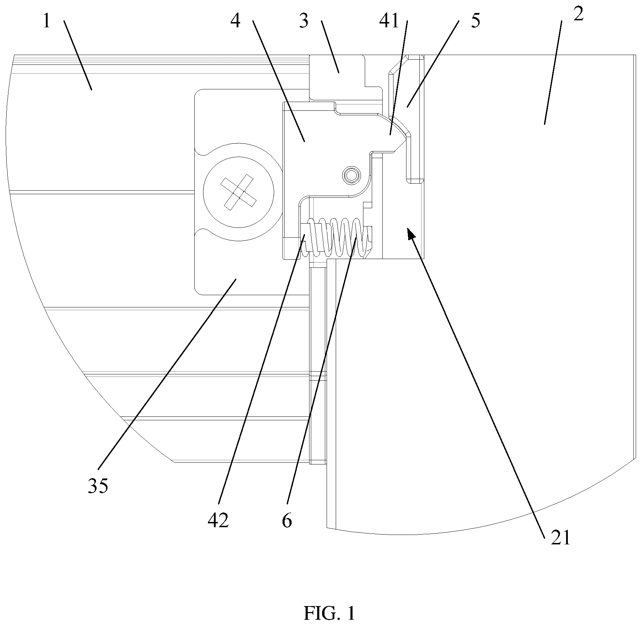

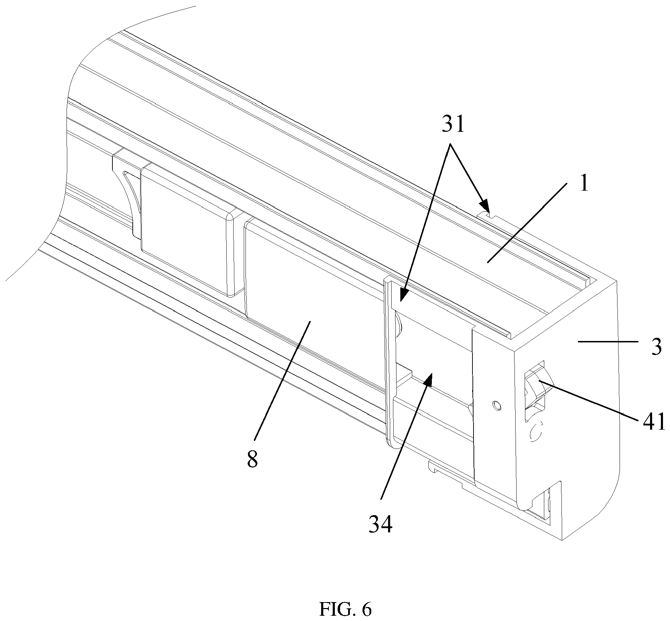

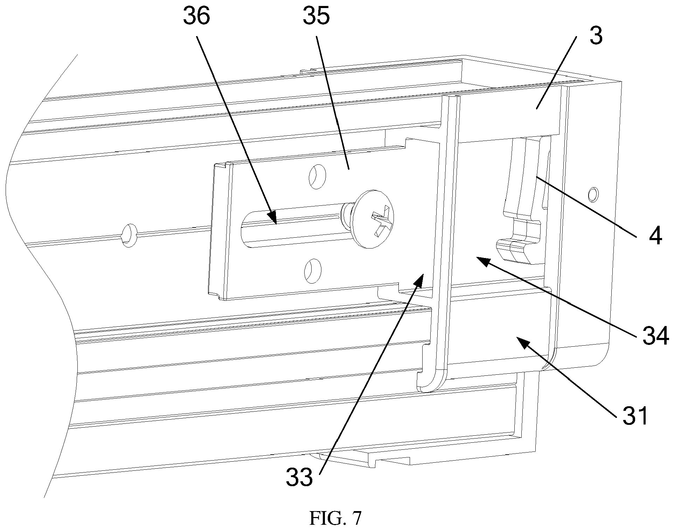

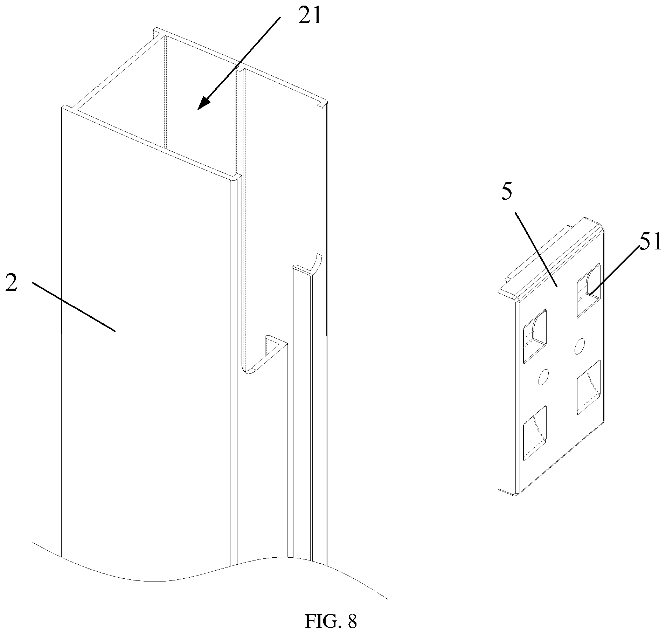

The correspondence between reference signs and component names in FIGS. 1-8 is as follows:
1- first frame edge, 11- socket, 2- second frame edge, 21- insertion fitting part, 3- connecting piece, 31- insertion part, 32- through hole, 33- recessed cavity, 34- mounting opening, 35-installation part, 36- position adjusting elongated hole, 4- locking piece, 41- locking tongue, 42-positioning post, 5- fitting piece, 51- locking tongue fitting part, 6- restoring spring, 7- pressing plate, 8- decorative piece, 9- guiding assembly surface, 10- limiting structure.

### Detailed Description

The embodiments of the present disclosure will be described in detail below with reference to the accompanying drawings. It should be noted that the embodiments in the present disclosure and the features in the embodiments can be arbitrarily combined with each other if there is no conflict.

In the following description, many specific details are set forth in order that the present disclosure is fully understood. However, the present disclosure can also be implemented in other ways different from those described herein. Therefore, the protection scope of the present disclosure is not limited by the specific embodiments disclosed below.

As shown in FIGS. 1-8, a connecting structure provided by an embodiment of the present disclosure is used for connecting adjacent first frame edge 1 and second frame edge 2 of a frame. One end of the second frame edge 2 is provided with an insertion fitting part 21. The connecting structure includes a connecting piece 3 configured for being fixed at one end of the first frame edge 1, an end (i.e., an external end) of the connecting piece 3 facing away from the first frame edge 1 being provided with an insertion part 31, and an end surface of the end of the connecting piece 3 facing away from the first frame edge 1 being provided with a through hole 32; a locking piece 4 having a locking tongue 41, which is swingably installed on the connecting piece 3, the locking piece 4 swinging back and forth to make the locking tongue 41 retract from and extend out of the through hole 32; and a fitting piece 5 having a locking tongue fitting part 51, which is configured for being fixedly installed in the insertion fitting part 21. The insertion part 31 is inserted into the insertion fitting part 21 from an end surface of the second frame edge 2, and the extended locking tongue 41 is cooperated with the locking tongue fitting part 51 to lock the insertion part 31 and the insertion fitting part 21 together.

The connecting structure is configured for connecting the adjacent first frame edge 1 and second frame edge 2 of the frame. The connecting piece 3 is fixed at one end of the first frame edge 1, and the fitting piece 5 is fixedly installed in the insertion fitting part 21. When the first frame edge 1 and the second frame edge 2 are connected, the insertion part 31 is inserted into the insertion fitting part 21 from the end surface of the second frame edge 2. After the insertion part is in place, the locking tongue 41 extending out of the through hole 32 is cooperated with the locking tongue fitting part 51 to prevent the insertion part 31 from moving reversely and exiting the insertion fitting part 21. Such connection is simple, convenient, time-saving, and labor-saving. The first frame edge 1 and the second frame edge 2 will not be unlocked and disconnected by themselves after being connected, the practicability is better.

As shown in FIGS. 1, 2, 4 and 5, the connecting structure further includes a restoring spring 6 which is disposed between the locking piece 4 and the connecting piece 3 and is configured for keeping the locking tongue 41 extending out of the through hole 32, so as to lock the insertion part 31 and the insertion fitting part 21 together and prevent the insertion part 31 and the insertion fitting part 21 from being disengaged after the first frame edge 1 and the second frame edge 2 are connected.

Furthermore, as shown in FIGS. 1, 2, 4 and 5, the locking piece 4 also has a positioning post 42 and a shaft hole located between the positioning post 42 and the locking tongue 41. A rotating shaft passes through the shaft hole and the connecting piece 3 to realize the swingable installation of the locking piece 4 on the connecting piece 3. One end of the restoring spring 6 presses against the side of the connecting piece 3 facing the first frame edge 1, and the other end of the restoring spring 6 abuts against the positioning post 42, keeping the locking tongue 41 extending out of the through hole 32 toward the fitting piece 5. The connecting piece 3 may be a connecting block.

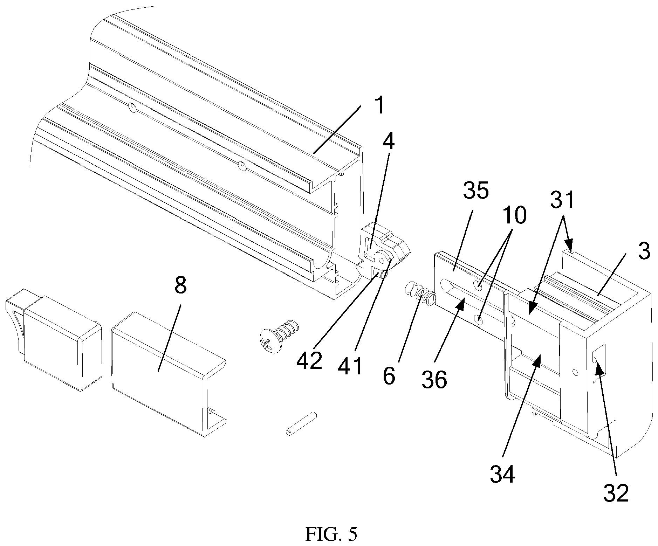

In an exemplary embodiment, as shown in FIGS. 5-7, the connecting piece 3 may be provided with a recessed cavity 33 which opens towards the first frame edge 1. A cavity wall of the recessed cavity 33 may be provided with a mounting opening 34. The locking piece 4 and the restoring spring 6 may be installed in the recessed cavity 33 through the mounting opening 34, and the locking piece 4 and the restoring spring 6 may be dismounted through the mounting opening 34 in case of damage.

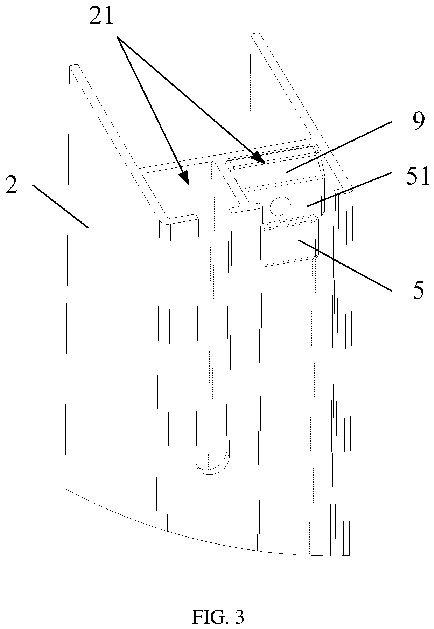

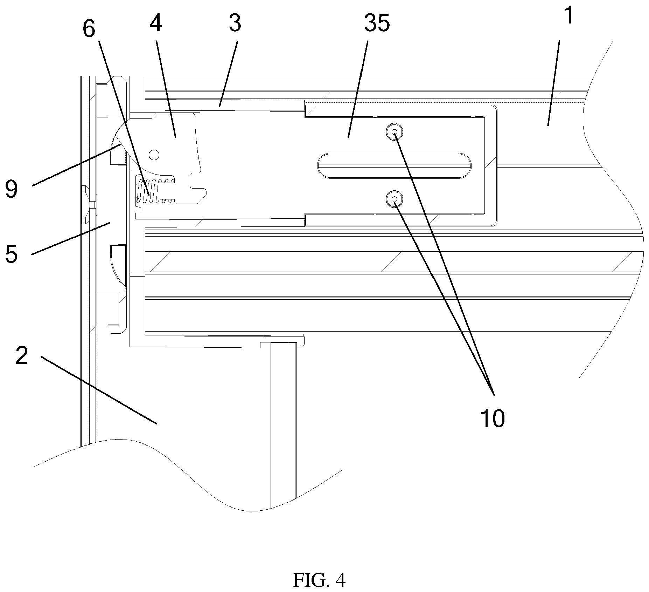

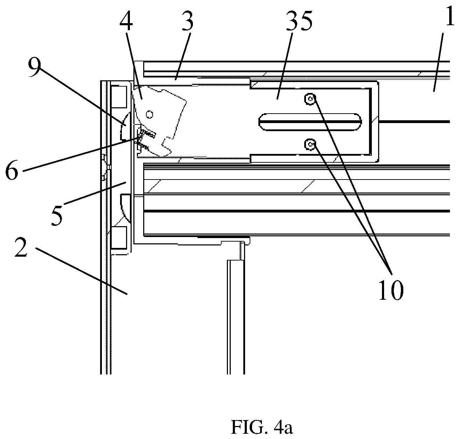

As shown in FIGS. 3, 4 and 4a, when the first frame edge 1 and the second frame edge 2 are disassembled, the positioning post 42 on the connecting piece 3 may be pressed toward the locking piece 4 to make the locking tongue 41 swing and retract from the through hole 32 to release the locking tongue 41 from the locking tongue fitting part 51, and then the first frame edge 1 may be moved reversely to separate the connecting piece 3 from the insertion fitting part 21, that is, to separate the first frame edge 1 from the second frame edge 2. There is a certain space above the locking piece 4 so that the locking tongue 41 can swing into the through hole 32 or retract from the through hole 32.

Specifically, as shown in FIGS. 3, 4 and 4a, the locking tongue fitting part 51 and the locking tongue 41 each have a guiding assembly surface 9, which may be a curved guiding surface or an inclined guiding surface or the like, so that the locking tongue 41 can be better engaged on the locking tongue fitting part 51. The swinging travel of the locking tongue 41 and the fitting travel of the insertion part 31 and the insertion fitting part 21 intersect and interfere with each other, so as to eliminate the degree of freedom and achieve the purpose of locking. The locking tongue fitting part 51 may be a locking boss or a locking groove, the insertion part 31 may be a through slit, the insertion fitting part 21 may be a through slot. A slot wall of the through slot is inserted into the through slit. The locking piece 4 may be fixed in the insertion fitting part 21 by a screw.

In an exemplary embodiment, as shown in FIGS. 1, 2, 4, 5 and 7, one end of the connecting piece 3 near to the first frame edge 1 is provided with an installation part 35, which is fixedly connected with the first frame edge 1. If the installation part 35 is an installation plate, the installation plate and the first frame edge 1 may be fixedly connected by a screw or other means.

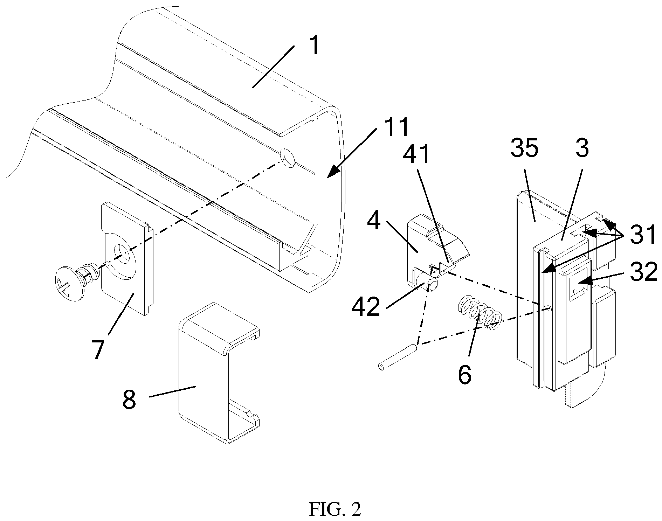

In an exemplary embodiment, as shown in FIGS. 1 and 2, the installation plate is provided with a screw hole, the first frame edge 1 is provided with a socket 11, and the side wall of the socket 11 is provided with a through hole. The installation plate is inserted into the socket 11, and the screw is screwed into the screw hole through the through hole. The screw may be disposed in the first frame edge 1 and configured to fix a pressing plate 7. The pressing plate 7 forms a T-shaped guide rail on the first frame edge 1. A decorative piece 8 formed with a T-shaped groove is clamped on the T-shaped guide rail, so that the screw is hidden in the decorative piece 8 and prevented from being exposed, to improve the aesthetics of the assembled product. When unlocking, the decorative piece 8 may be dissembled first and then the locking piece 4 may be pressed to make the locking tongue 41 retract into the through hole to be unlocked with the locking tongue fitting part 51. In this embodiment, it is also possible that the decorative piece 8 formed with a concave groove is clamped on the T-shaped guide rail. In this embodiment, the shape of the guide rail formed by the pressing plate 7 on the first frame edge 1 and the shape of the decorative piece 8 are not limited to a T-shape or a concave shape, as long as the shapes of the two can fit each other and the screw arranged in the first frame edge 1 is hidden by the decorative piece 8.

In another exemplary embodiment, as shown in FIGS. 4-7, the installation plate is provided with a position adjusting elongated hole 36, the first frame edge 1 is provided with a screw hole, and the screw passes through the position adjusting elongated hole 36 and is screwed into the screw hole. The length of the connecting piece 3 extending beyond the end of the first frame edge 1 can be adjusted by adjusting the position of the screw in the position adjusting elongated hole 36, so that the equivalent length of the first frame edge 1 can be adjusted to better adapt to an oblique wall. The installation plate is fixed on the first frame edge 1 and forms a T-shaped guide rail on the first frame edge. The decorative piece 8 formed with a T-shaped groove is clamped on the T-shaped guide rail (it can be limited by a limiting structure 10 which includes a limit post and a recess, the limit post slides into the recess to realize the position limiting and prevent the decorative piece from sliding freely on the installation plate. The limit post is located on the decorative piece and the recess is located on the installation plate). When unlocking, the decorative piece 8 may be disassembled first and then the locking piece 4 may be pressed to make the locking tongue 41 retract into the through hole to be unlocked with the locking tongue fitting part 51. In this embodiment, it is also possible that the decorative piece 8 formed with a concave groove is clamped on the T-shaped guide rail. In this embodiment, the shape of the guide rail formed by the installation plate on the first frame edge and the shape of the decorative piece 8 are not limited to a T-shape or a concave shape, as long as the shapes of the two can fit each other and the screw arranged in the first frame edge 1 can be hidden by the decorative piece 8.

The frame provided by the present disclosure includes two oppositely disposed first frame edges 1, two oppositely disposed second frame edges 2, and the connecting structure described in any of the above embodiments.

The frame provided by the present disclosure has all the advantages of the connecting structure described in any of the above embodiments, which will not be repeated here.

The first frame edge 1 may be a guideway (the socket 11 is located on a bottom wall of the guideway, and both ends of the guideway are provided with the connecting pieces 3), and the second frame edge 2 may be a lateral aluminum piece (both ends thereof are provided with the fitting pieces 5).

As shown in the above-mentioned FIGS. 1-8, the present disclosure also provides a connecting piece for connecting adjacent first and second frame edges, one end of the second frame edge being provided with an insertion fitting part, a fitting piece having a locking tongue fitting part being fixedly installed inside the insertion fitting part, and the connecting piece being configured to be fixed at one end of the first frame edge. An end surface of the connecting piece facing away from the end of the first frame edge is provided with a through hole so that a locking tongue of a locking piece swings back and forth to extend out of and retract from the through hole. An end of the connecting piece facing away from the first frame edge is provided with an insertion part configured for being inserted into the insertion fitting part from an end surface of the second frame edge, so that the extended locking tongue is cooperated with the locking tongue fitting part to lock the insertion part and the insertion fitting part together.

Optionally, a side of the connecting piece facing the first frame edge is configured for accommodating a restoring spring, and one end of the restoring spring presses against the side and the other end of the restoring spring abuts against the locking piece.

Optionally, the connecting piece is provided with a recessed cavity which opens toward the first frame edge and is configured for installing the locking piece and the restoring spring therein.

Optionally, a cavity wall of the recessed cavity is provided with a mounting opening for mounting the locking piece and the restoring spring in the recessed cavity through the mounting opening or dismounting the locking piece and the restoring spring through the mounting opening.

Optionally, one end of the connecting piece near the first frame edge is provided with an installation part, and the installation part is fixedly connected with the first frame edge.

Optionally, the installation part is an installation plate, and the installation plate is fixedly connected with the first frame edge by a screw.

Optionally, the installation plate is provided with a screw hole, the first frame edge is provided with a socket, a side wall of the socket is provided with a through hole; the installation plate is configured to be inserted into the socket, and the screw passes through the through hole and is screwed into the screw hole.

Optionally, the installation plate is provided with a position adjusting elongated hole, and the first frame edge is provided with a screw hole. The screw passes through the position adjusting elongated hole and is screwed into the screw hole. The position adjusting elongated hole is configured to adjust the length of the connecting piece extending beyond the end of the first frame edge by adjusting the position of the screw in the position adjusting elongated hole.

In summary, the connecting structure provided by the embodiments of the present disclosure is configured for connecting adjacent first and second frame edges of a frame. The connecting piece is fixed at one end of the first frame edge. The fitting piece is fixedly installed in the insertion fitting part. When the first and second frame edges are connected, the insertion part is inserted into the insertion fitting part from the end surface of the second frame edge. After the insertion part is in place, the locking tongue extending out of the through hole is cooperated with the locking tongue fitting part to prevent the insertion part from moving reversely and exiting the insertion fitting part. Such connection is simple, convenient, time-saving, and labor-saving. The first and the second frame edges will not be unlocked and disconnected by themselves after being connected, the practicability is better.

In the description of the present disclosure, the terms "install", "join", "connect" and "fix" or the like should be understood in a broad sense. For example, "connect" can be a fixed connection, a detachable connection or an integrated connection; and it may be a direct connection or an indirect connection through an intermediate medium. For those of ordinary skill in the art, the specific meaning of the above terms in the present disclosure can be understood according to specific situations.

In the description of the present specification, descriptions of the terms "one embodiment", "some embodiments", "specific embodiment" or the like mean that the specific features, structures, materials or characteristics described in connection with the embodiment(s) or example(s) are included in at least one embodiment or example of the present disclosure. In this specification, the schematic expressions of the above terms do not necessarily refer to the same embodiment or example. Furthermore, the specific features, structures, materials or characteristics described may be combined in any one or more embodiments or examples in a suitable manner.

Although the implementations disclosed in this disclosure are as above, they are implementations adopted only for the convenience of understanding this disclosure, and are not intended to limit the present disclosure. Any person skilled in the art to which the present disclosure pertains may make any changes and modifications in the implementation forms and details without departing from the spirit and scope of the present disclosure. However, the scope of patent protection of the present disclosure shall still be determined by the scope defined by the appended claims.

## Claims

1. A connecting structure for connecting adjacent first and second frame edges, one end of the second frame edge being provided with an insertion fitting part, the connecting structure comprising:
a connecting piece configured for being fixed at one end of the first frame edge, an end of the connecting piece facing away from the first frame edge being provided with an insertion part and an end surface of the end of the connecting piece facing away from the first frame edge being provided with a through hole;
a locking piece having a locking tongue, the locking piece swingably installed on the connecting piece, the locking piece swinging back and forth to enable the locking tongue to retract from and extend out of the through hole; and
a fitting piece having a locking tongue fitting part, the fitting piece being configured to be fixedly installed in the insertion fitting part;
wherein the insertion part is inserted into the insertion fitting part from an end surface of the second frame edge, the extended locking tongue is cooperated with the locking tongue fitting part to lock the insertion part and the insertion fitting part together.

2. The connecting structure according to claim 1, further comprising a restoring spring disposed between the locking piece and the connecting piece and configured to keep the locking tongue extending out of the through hole.

3. The connecting structure according to claim 2, wherein the locking piece has further a positioning post and a shaft hole, the shaft hole is located between the positioning post and the locking tongue, one end of the restoring spring presses against a side of the connecting piece facing the first frame edge, and the other end of the restoring spring abuts against the positioning post.

4. The connecting structure according to claim 3, wherein the connecting piece is provided with a recessed cavity which opens toward the first frame edge, and the locking piece and the restoring spring are installed in the recessed cavity.

5. The connecting structure according to claim 4, wherein a cavity wall of the recessed cavity is provided with a mounting opening, and the locking piece and the restoring spring are capable of being mounted in the recessed cavity through the mounting opening or being dismounted through the mounting opening.

6. The connecting structure according to claim 1, wherein the locking tongue fitting part and the locking tongue each have a guiding assembly surface, the locking tongue fitting part is a locking boss or a locking groove, the insertion part is a through slit, the insertion fitting part is a through slot, and a slot wall of the through slot is inserted into the through slit.

7. The connecting structure according to any one of claims 1 to 6, wherein one end of the connecting piece near the first frame edge is provided with an installation part, and the installation part is fixedly connected with the first frame edge.

8. The connecting structure according to claim 7, wherein the installation part is an installation plate, and the installation plate is fixedly connected with the first frame edge by a screw.

9. The connecting structure according to claim 8, wherein the installation plate is provided with a screw hole, the first frame edge is provided with a socket, a side wall of the socket is provided with a through hole, the installation plate is inserted into the socket and the screw passes through the through hole and is screwed into the screw hole;
the connecting structure also comprises a pressing plate and a decorative piece, wherein the pressing plate is fixed on the first frame edge by the screw to form a guide rail on the first frame edge, and the decorative piece is formed with a concave groove, and the formed concave groove is clamped on the guide rail such that the screw is hidden in the decorative piece.

10. The connecting structure according to claim 8, wherein the installation plate is provided with a position adjusting elongated hole, the first frame edge is provided with a screw hole, the screw passes through the position adjusting elongated hole and is screwed into the screw hole, and the position adjusting elongated hole is configured to adjust the length of the connecting piece extending beyond the end of the first frame edge by adjusting the position of the screw in the position adjusting elongated hole;
the connecting structure further comprises a decorative piece, the installation plate forms a guide rail on the first frame edge, the decorative piece formed with a concave groove is clamped on the guide rail so that the screw is hidden in the decorative piece.

11. A frame comprising a first frame edge, a second frame edge and the connecting structure according to any one of claims 1 to 10.

12. A connecting piece for connecting adjacent first and second frame edges, the connecting piece being configured to be fixed at one end of the first frame edge, one end of the second frame edge being provided with an insertion fitting part in which a fitting piece having a locking tongue fitting part is fixedly installed, wherein,
an end surface of the connecting piece facing away from the one end of the first frame edge is provided with a through hole for a locking tongue of a locking piece swinging back and forth to retract from and extend out of the through hole;
an end of the connecting piece facing away from the first frame edge is provided with an insertion part configured for being inserted into the insertion fitting part from an end surface of the second frame edge, so that the extended locking tongue is cooperated with the locking tongue fitting part to lock the insertion part and the insertion fitting part together.

13. The connecting piece according to claim 12, wherein a side of the connecting piece facing the first frame edge is configured for accommodating a restoring spring, one end of the restoring spring presses against the side and the other end of the restoring spring abuts against the locking piece.

14. The connecting piece according to claim 13, wherein the connecting piece is provided with a recessed cavity which opens toward the first frame edge and is configured for installing the locking piece and the restoring spring therein.

15. The connecting piece according to claim 14, wherein a cavity wall of the recessed cavity is provided with a mounting opening for the locking piece and the restoring spring to mount in the recessed cavity through the mounting opening or for the locking piece and the restoring spring to dismount through the mounting opening.
